Europäisches Patentamt

(19) European Patent Office

Office européen des brevets

(11) Publication number: **0 021 798**

**B1**

(12) **EUROPEAN PATENT SPECIFICATION**

(45) Date of publication of patent specification: **11.04.84**

(51) Int. Cl.³: **G 01 N 27/46**

(21) Application number: **80302073.4**

(22) Date of filing: **19.06.80**

(54) **Method of making a device for determining ionic activity.**

(30) Priority: **20.06.79 US 50845**

(43) Date of publication of application:
**07.01.81 Bulletin 81/1**

(45) Publication of the grant of the patent:
**11.04.84 Bulletin 84/15**

(84) Designated Contracting States:
**BE CH DE FR GB LI**

(56) References cited:
**US - A - 4 053 381**

(73) Proprietor: **EASTMAN KODAK COMPANY**
**343 State Street**
**Rochester New York 14650 (US)**

(72) Inventor: **Gottermeier, William Franklin**
**Kodak Park**
**Rochester New York (US)**

(74) Representative: **Pepper, John Herbert et al,**
**KODAK LIMITED Patent Department P.O. Box 114**
**190 High Holborn**
**London WC1V 7EA (GB)**

Courier Press, Leamington Spa, England.

## Method of making a device for determining ionic activity

The present invention relates to a method of making a device useful in determining the activity of an ionic analyte of an aqueous solution, and particularly useful in potentiometrically measuring ion activity in drops of biological fluids.

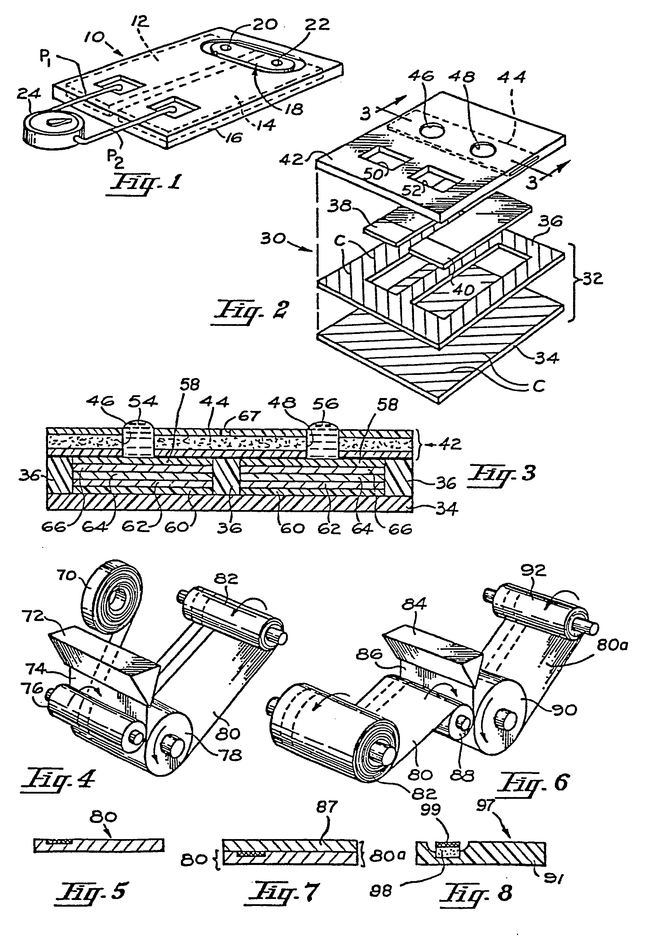

There is a variety of apparatus in the prior art for measuring ion activity in solutions. A test device incorporating ion-selective electrodes which develop an electrical potential proportional to the logarithm of the activity of the ions to which the electrodes are sensitive is described in Item 17517 of the November 1978, Vol. 175 edition of Research Disclosure and is shown at 10 in Fig. 1 of the drawings accompanying this specification. In Fig. 1 two solid electrodes 12 and 14 are mounted on a frame 16, and a capillary bridge 18 is provided for promoting ionic migration between two fluid access holes 20 and 22 at the electrodes. The capillary bridge includes a nonporous support layer, a porous layer with ionic access to both electrodes, and a top nonporous cover layer which is preferably hydrophobic. When a drop of reference solution of known ion activity is applied to one fluid access hole and a drop of test solution is applied to the other fluid access hole, the liquid in the drops spreads into the porous layer until contact is made at a thin junction interface, permitting ionic migration between the drops. An electrometer 24 is provided to measure the electrical potentials at the interfaces between each solution drop and its associated electrode to provide an indication of ion activity in the test solution.

Although the device disclosed in the aforementioned edition of Research Disclosure (which is claimed in EP—A—0007794) provides excellent results in determining ion activity in liquids, the present invention is an improvement which provides advantages in both assembly and performance. As can be seen in Fig. 1, capillary bridge 18 is a small discrete part which must be both accurately placed on the electrodes during assembly and held in place by an adhesive. These constraints increase assembly problems and potentially decrease performance due to possible misalignment of the fluid access holes and failure of the adhesive bond. Further, fluid leakage from the edge of the bridge could affect the area of wetted electrode surface because the edges of the bridge are aligned with the electrodes. Unpredictability of the total area of wetted electrode surface would adversely affect the test results.

The present invention provides a method of making a device for determining ionic activity, characterised by embedding an elongate ribbon of porous material within an elongate web of nonporous material or pressing an elongate ribbon of porous material onto an elongate web of nonporous material to form an elongate web of cover sheet, forming in the cover sheet a series of fluid access holes through the porous material and a series of electrical access holes, joining to said web a frame of electrically nonconductive material with electrodes sandwiched between the cover sheet web and the frame to form a composite strip, the electrodes being in an orientation such that each of said fluid access holes aligns with a different electrode and each of said electrical access holes aligns with a different electrode, and severing the composite strip into individual devices each having two of said fluid access holes, two of said electrical access holes, and two of said electrodes.

In accordance with one embodiment of the present invention, the cover sheet is formed by embedding a ribbon of porous material in the cross section of a plastic web by a two-pass extrusion process. The porous material is located only in an area along a line extending through the centres of both fluid access holes.

According to another embodiment of the present invention, the cover sheet is formed by coating one side of a porous ribbon with a plastics material and then pressing the coated ribbon onto a film of nonporous material.

The present invention permits assembly machines to be significantly less complex because the assembled device for determining ionic activity has fewer components and the need to accurately locate a small discrete capillary bridge has been eliminated. As a result, test devices manufactured in accordance with the present invention exhibit exceptionally large latitude in the placement of drops of fluid (i.e., a drop of fluid may be placed upon the device anywhere over a relatively large area and still wet the electrode area) because the simplified assembly process allows the fluid access hole locations to be more accurately controlled. This feature is important in permitting relaxed manufacturing tolerances in automatic processing apparatus wherein the drops are applied mechanically.

Further, fluid leakage from the edge of the bridge will not affect the area of wetted electrode surface because the edges of the bridge of the present invention are not aligned with the electrodes.

The present invention will now be described, by way of example, with reference to the accompanying drawings, in which:

Fig. 1 is a perspective view of a device for determining the activity of an ionic analyte of an aqueous solution, constructed in accordance with the state of the art;

Fig. 2 is an exploded perspective view of a device for determining the activity of an ionic analyte of an aqueous solution, constructed in accordance with the present invention;

Fig. 3 is a sectional view taken generally along the line 3—3 in Fig. 2, with the device in an assembled, non-exploded condition;

Figs. 4—7 are schematic illustrations of how one embodiment of a cover sheet, forming part of the device of the present invention, is fabricated;

Figs. 8 and 9 are schematic illustrations of how another embodiment of the cover sheet of the present invention is fabricated; and

Fig. 10 schematically shows the manufacture of devices according to the present invention.

Although the present invention as hereinafter described is embodied in a test device for potentiometrically determining ion activity through the use of ion-selective electrodes, such device can be used for other electrical tests of a liquid solution. The device is particularly suited for use in automated handling equipment.

Fig. 2 illustrates in exploded perspective a test device 30 which has an electrically insulative mounting frame 32 formed of a base web 34 and a spacer web 36. Two solid electrodes 38 and 40 are mounted in the frame 32 and electrically isolated from each other. A cover sheet 42, with an internal capillary bridge 44, promotes ionic migration between solution drops deposited in fluid access holes 46 and 48. The fluid access holes 46, 48 extend through the cover sheet 42 in the region of electrodes 38 and 40. Two electrical access holes 50 and 52 are also formed in the cover sheet 42.

For a direct mode of determining potentials, the electrodes 38 and 40 are respectively an ion-selective electrode and an external reference electrode. For a differential measurement, comparing the ion activity of an unknown test solution with that of a similar reference solution of known ion concentration, the electrodes 38 and 40 are each ion-selective. Electrodes 38 and 40 are shown as being identical and, therefore, suitable for the differential mode of measurement which is made by an electrometer, such as that illustrated at 24 in Fig. 1, when a test drop 54 (Fig. 3) is applied to one electrode and a reference drop 56 having a known concentration of ions is applied to the other electrode. In Fig. 3, the thickness of the layers of the electrodes has been greatly exaggerated for clarity.

Both electrodes are formed of layers comprising an ion-selective membrane 58 (permeable to the ion of choice) coated over a multilayer internal reference element which in turn is coated over a support 60, all of which are solid layers. Each internal reference element is shown as comprising several layers such as metal layer 62, layer 64 which is an insoluble salt of the metal of layer 62, and layer 66 which is an electrolyte containing layer. Although the layers are generally referred to as being "coated" one over another, it should be understood that the term "coating" is meant to include laminating or otherwise forming the various strata one over another by any technique.

For purposes of describing the present invention, it is believed that a detailed discussion of the structure and operation of electrodes 38 and 40 is not necessary. However, a full description of various embodiments of such electrodes and the method of use thereof may be found in U.S. Patent No. 4,053,381. The disclosure of that patent is specifically incorporated herein by reference.

Cover sheet 42 is shown in Fig. 2 and in section in Fig. 3. The cover sheet 42 is preferably a flat, composite web having holes 46, 48, 50 and 52 which extend right through the cover sheet. A ribbon of porous material is embedded in the cover sheet 42 to form capillary bridge 44 between fluid access holes 46 and 48. The capillary bridge promotes ionic migration between electrodes 38 and 40. Bridge 44, in a preferred embodiment, is a porous paper into which liquid drops 54 and 56 are absorbed to form an ionic junction. A suitable paper for correct absorption of human serum is Whatman #2 chroma, 0.18 mm (0.007 inch) thick, which is manufactured in the United Kingdom by W. and R. Balston, Ltd. Liquid solution drops 54 and 56 are deposited in the fluid access holes 46 and 48. The liquid fills the holes and forms large caps on cover sheet 42 as can be seen in Fig. 3. Within 10 to 30 seconds the liquid is absorbed into the paper. Another example of a material suitable for the porous ribbon is disclosed in the aforementioned U.S. Patent 4,053,381. However, other porous material which is resistant to becoming clogged by the plastics material which forms the cover sheet will readily occur to those skilled in the art. Throughout this specification and the claims, the porous material which forms capillary bridge 44 is referred to as a ribbon, and that is meant to define any elongate form such as, for example, a web, a thread, threads, or a strip.

The liquid from each drop 54, 56 spreads into capillary bridge 44 until contact is made between the liquids from the two drops at about the middle of the bridge 44 to form an ionic junction. Preferably, sufficient liquid is left unabsorbed to fill fluid access holes 46 and 48. It is desirable to vent the cover sheet 42 to assure rapid junction formation. Vents, such as shown at 67 in Fig. 3, allow the escape of air in the porous material which is displaced by the liquid wave fronts advancing from the fluid access holes 46 and 48. Venting can be accomplished by puncturing the top plastics covering to expose the porous material to the atmosphere. Optimally, vents should be spaced along the entire bridge area between the fluid access holes 46, 48. This design is better than having vent holes only in the centre of the bridge because in this latter case, the vent holes could be sealed off before formation of a liquid junction. Such an undesirable condition would be augmented when the flow rates from the test and reference drops 54, 56 are significantly different.

Capillary bridge 44 is preferably located only in an area along a line which includes the centres of the fluid access holes 46 and 48. Generally, the porous material which forms the capillary bridge 44 cannot be used throughout the full area of the cover sheet because it would have too large a fluid capacity.

Operation of the device proceeds by spotting a drop 56 of the reference solution in fluid access hole 48 and a drop 54 of the test solution in fluid access hole 46. Probes, like probes $P_1$, $P_2$ in Fig. 1, contact electrodes 38 and 40, and the potentials are read on an electrometer such as that illustrated at 24 in Fig. 1. The reading indicates ion activity in the test solution.

The test device 30 is then removed from contact with the electrometer and disposed of, and a new device 30 is positioned to receive subsequent drops of solution and to contact the electrometer probes.

Reference is made to Figs. 4—7 for a schematic illustration of the fabrication of an elongate web from which a plurality of cover sheets 42 are produced. A roll 70 of suitable porous material for capillary bridge 44 is positioned adjacent to an extrusion die 72, and the porous material is drawn under the extrusion die 72 into contact with a film 74 of molten plastics material extruded from the die. Film 74 may be polystyrene, but any plastics material which can be formed into a free film would be acceptable.

Before film 74 is completely quenched, the composite web of porous material from roll 70 and plastics film 74 is calendered between a pair of rollers 76 and 78. The resultant composite web 80 has a uniform thickness (as shown in cross section in Fig. 5) and is wound into a roll 82.

Referring to Fig. 6, composite web 80 is next unwound from roll 82 and drawn under an extrusion die 84 into contact with another free film 86 of molten plastics material so that the side of web 80 into which the porous material has been pressed is overcoated with a layer 87 of plastics material as the web 80 passes between rollers 88 and 90 to form a final web 80a which is wound into a roll 92. A cross sectional view of the final web is shown in Fig. 7.

Several variations of the above process are within the scope of the present invention. For example, a plurality of parallel, spaced ribbons of porous material can be embedded into a plastics web. The web would then be slit between the ribbons. Further, the need for a two-pass operation could be eliminated by use of multiple coating dies or a crosshead die.

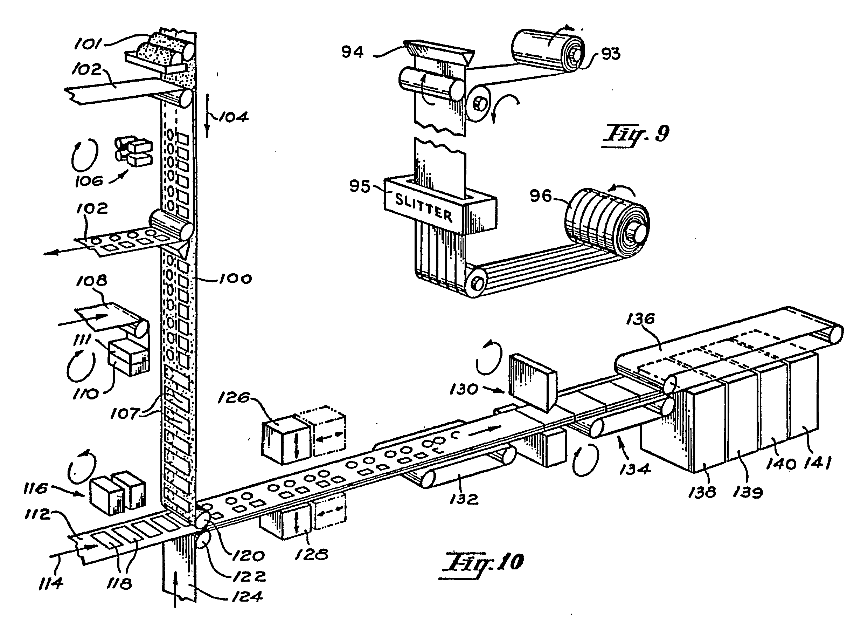

Fig. 8 is a cross-sectional view of a composite web formed in accordance with another embodiment of the present invention. As shown in Fig. 9, a web of porous material from a supply roll 93 is coated with polyethylene from an extrusion die 94. After the polyethylene has been quenched, the web is slit into ribbons by a slitter 95 and wound into a plurality of rolls 96.

When the coated web from one of the rolls 96 is drawn under an extrusion die similar to die 72 of Fig. 4, and calendered with the polyethylene coating facing away from free film 74 of molten polystyrene, a composite web 97 as shown in Fig. 8 is formed. In that figure, the porous material is denoted by reference numeral 98, its polyethylene coating by numeral 99, and the quenched polystyrene base by numeral 91.

The cover sheet formed by this process has inherent ventilation because the polystyrene of base 91 does not bond to the polyethylene of coating 99 during the extrusion process. The exposed porous material at the edge of coating 99 provides a venting path to allow air to escape from the bridge, formed by the porous material 98, as it is displaced by liquid absorbed by the bridge. If additional venting is desired, it can be more easily implemented than in the case of the Figs. 4—7 embodiment because coating 99 is thinner than the layer 87 of the previous embodiment.

The unitary capillary bridge and cover sheet eliminates or simplifies a number of slide assembly steps inherent in devices having discrete bridges. Thus, assembly machines can be significantly less complex.

Fig. 10 schematically shows how the devices can be assembled when a unitary bridge and cover sheet is used. All of the materials except the ion-selective electrodes are assembled by simply laminating continuous webs of material together and chopping finished slides from the resulting web.

A web 100, which has been manufactured and slit in accordance with, for example, any of the previously described embodiments, is coated by coater 101 on one side with an adhesive and covered by an interleaving material 102. This composite web is moved continuously, in the direction of arrow 104, past a set of punches, at a punching station 106, which set of punches moves cyclically to perforate the web, forming round fluid access holes 46 and 48 and rectangular electrical access holes 50 and 52 (Fig. 2).

After leaving punching station 106, the interleaving material 102 is stripped from web 100 to expose the adhesive coating. Ion-selective electrodes 107, which are chopped from a web 108 by punches 110 and 111, are applied to the adhesive in alignment with the fluid and electrical access holes. Punches 110 and 111 are close together when they punch web 108 to eliminate waste. As the punches 110, 111 move toward web 100 to deposit the electrodes, the punches 110, 111 separate so that the electrodes 107 are spaced apart. The adhesive coating on web 100 holds the ion-selective electrodes 107 in position and creates a seal around the fluid access holes 46, 48 such that in use of the assembled test device the reference and sample liquids are prevented from spreading between the cover sheet and the ion-selective electrodes.

A spacer web 112 is moved in the direction of arrow 114 from a stock roll (not shown). The spacer web 112 has a plurality of ultrasonic energy concentrators on its upper surface. The concentrators are schematically shown as lines c on spacer web 36 in Fig. 2 and aid in the welding process specified hereinafter. As web 112 passes under a pair of punches 116, rectangular holes 118 are punched to align with ion-selective electrodes 107 on web 100 when the two webs join between a pair of rollers 120 and 122.

A third web 124 also passes between rollers 120 and 122 to join with the other two webs. The web 124 also has ultrasonic energy concentrators c as shown schematically in Fig. 2 and forms base web 34 (Fig. 2) in the finished device.

An ultrasonic horn or horns 126 and anvil or anvils 128 are movable into engagement with, and then along with, the webs 100, 112, 124 to weld the webs together. The presence of the energy concentrators between individual webs 100, 112, and 124 increase the welding operation's efficiency.

The joined webs are translated from the welding station to a knife press 130 by a continuously moving vacuum belt drive 132. Knife press 130 has a rotary motion to chop the joined webs into individual slides which are moved by a belt 134 which spaces the slides apart, to a vacuum belt 136 which serves for selecting and sorting the slides. Belt 136 carries the slides above bins 138—141 for sorting as desired. For example, bin 138 could receive rejects, bin 139 might receive randomly selected slides for quality control testing, and bins 140 and 141 would be filled with slides for commercial sale.

The unitary cover sheet and porous bridge in accordance with the present invention reduces the number of slide components and offers a major advantage in manufacture by eliminating the need for the slower and waste prone process of placing discrete bridge units onto the partially assembled slide. Further, the unitary cover sheet and porous bridge minimizes problems when in use, such as fluid leakage onto the ion-selective electrodes and it increases the latitude in placement of the drop.

Fluid leakage from the edge of the porous bridge of the unitary cover sheet and porous bridge will not increase the area of wetted electrode surface because the edge of the bridge is isolated from the ion-selective electrodes. Accordingly, test results will not be affected by such leakage.

Further, such a cover sheet permits more accurate positioning of the fluid access hole than in the case where an ionic bridge must be placed, as a discrete part, on the slide. Accurate positioning of the fluid access hole increases the latitude available in placing the drop.

Another advantage of the above-described embodiments of the present invention is derived from the fact that the cover sheet is mechanically held to the slide by an ultrasonic seal around its entire perimeter. Spacer web 36 is slightly thinner than electrodes 38 and 40 so that the cover sheet and electrodes are pressed together. This difference in thickness is not apparent in Fig. 3 because of convenience of illustration. Thus, the adhesive coating on the cover sheet serves primarily as a fluid seal and does not have to be strong enough to hold the bridge and electrodes together, thereby decreasing the risk of delamination of the bridge and fluid leakage thereunder.

## Claims

1. A method of making a device for determining ionic activity, characterised by embedding an elongate ribbon of porous material (70; 98) within an elongate web of non-porous material or pressing an elongate ribbon of porous material onto an elongate web of non-porous material to form an elongate web of cover sheet (42), forming in the cover sheet (42) a series of fluid access holes through the porous material and a series of electrical access holes, joining to said web a frame (112, 124) of electrically nonconductive material with electrodes (107) sandwiched between the cover sheet web (100) and the frame (112, 124) to form a composite strip, the electrodes (107) being in an orientation such that each of said fluid access holes aligns with a different electrode (107) and each of said electrical access holes aligns with a different electrode (107), and severing the composite strip into individual devices each having two of said fluid access holes, two of said electrical access holes, and two of said electrodes (170).

2. A method according to claim 1, characterised in that the step of embedding the elongate ribbon of porous material (70) is effected by extruding the non-porous material (74) to form a film, calendering the film (74) and the elongate ribbon of porous material (70) between a pair of rollers (76, 78) to form a composite web (80) with the ribbon (70) impressed in one surface thereof, and drawing the composite web (80) under an extrusion die (84) with said one surface in contact with another film of non-porous material (86) from the extrusion die (84), whereby said one surface is overcoated with a layer of non-porous material (86).

3. A method according to claim 1, characterised in that the step of pressing the elongate ribbon of porous material (98) onto the elongate web of non-porous material is effected by drawing a web of the porous material (98) under an extrusion die (94) in contact with a first film of non-porous material (99) discharged from the extrusion die (94), whereby said porous material (98) is coated on one side by said first film (99), slitting the coated web of porous material into a plurality of ribbons (96), extruding a second film of non-porous material (91) wider than each ribbon of porous material (98), and calendering the coated ribbon of porous material and the second film (91) between a pair of rollers with the coating facing away from the second film (91) to form a composite web (97) with the ribbon of porous material (98) between the non-porous films (99, 91).

4. A method according to claim 3, characterised in that the first film (99) is formed of polyethylene and the second film (91) is formed of polystyrene.

## Revendications

1. Procédé de fabrication d'un dispositif pour déterminer l'activité ionique, caractérisé en ce qu'on noie un long ruban de matériau poreux (70; 98) dans une bande longue de matériau non-poreux ou en ce qu'on presse un long ruban de matériau poreux sur une bande longue de matériau non-poreux pour former une bande longue de feuille de couverture (42), on ménage dans la feuille de couverture (42) à travers le matériau poreux une série d'orifices d'accès de fluide et une série d'orifices d'accès électrique, on joint à la dite bande une monture (112, 124) de matériau électriquement non-conducteur, avec des électrodes (107) insérées entre la bande de feuille de couverture (100) et la monture (112, 124) pour former une bande composite où les électrodes (107) ont une orientation telle que chacun des dits orifices d'accès de fluide est aligné avec un électrode (107) différente et chacun des dits orifices d'accès de fluide est aligné avec une électrode trode (107) différente, et en ce qu'on tronçonne la bande composite en dispositifs individualisés dont chacun possède deux des dits orifices d'accès de fluide, deux des dits orifices d'accès électrique et deux des dites électrodes (107).

2. Procédé conforme à la revendication 1, caractérisé en ce que la phase où l'on noie le long ruban de matériau poreux (70) est obtenu en extrudant le matériau non-poreux (74) pour former une pellicule, en calandrant la pellicule (74) et le long ruban de matériau poreux (70) entre deux rouleaux (76, 78) de manière à former une bande composite (80) avec le ruban (70) incrusté dans une de ses surfaces, et en faisant passer la bande composite (80) sous une filière (84) de manière que la dite surface soit en contact avec une autre pellicule de matériau non-poreux (86) provenant de la filière (84), afin que la dite surface soit recouverte d'une couche de matériau non-poreux (86).

3. Procédé conforme à la revendication 1, caractérisé en ce que la phase où l'on presse le long ruban de matériau poreux (98) sur la bande longue de matériau non-poreux est obtenue en faisant passer une bande du matériau poreux (98) sous une filière (94) en contact avec une première pellicule de matériau non-poreux (99) provenant de la filière (94), de manière que le dit matériau poreux (98) soit recouvert d'un côté par la dite pellicule (99), en refendant la bande de matériau poreux ainsi recouverte en plusieurs rubans (96), en extrudant une seconde pellicule de matériau non-poreux (91) plus large que chaque ruban de matériau poreux (98), et en calandrant le ruban de matériau poreux recouvert et la seconde pellicule (91) entre un couple de rouleaux, le couchage étant à l'opposé de la seconde pellicule (91), pour former une bande composite (97) avec le ruban de matériau poreux (98) entre les pellicules non-poreuses (99, 91).

4. Procédé conforme à la revendication 3, caractérisé en ce que la première pellicule (99) est faite de polyéthylène et la seconde pellicule (91) est faite de polystyrène.

## Patentansprüche

1. Verfahren zur Herstellung einer Vorrichtung zum Bestimmen der Ionenaktivität, dadurch gekennzeichnet, daß ein längliches Band aus porösem Material (70; 98) in einen länglichen Streifen aus nichtporösem Material eingebettet, oder ein längliches Band aus porösem Material auf einen länglichen Streifen aus nichtporösem Material aufgepreßt wird, wodurch ein länglicher Streifen einer Deckfolie (42) entsteht, daß in der Deckfolie (42) eine Reihe von Öffnungen für die Zuführung von Flüssigkeit ausgebildet werden, die sich durch das poröse Material hindurch erstrecken, sowie eine Reihe von elektrischen Zuführöffnungen, daß an den Streifen ein Rahmen (112, 114) aus einem elektrisch nicht leitfähigen Material angefügt wird, wobei Elektroden (107) zwischen dem Deckfolienstreifen (100) und dem Rahmen (112, 124) liegen und so ein zusammengesetzter Streifen entsteht, und die Elektroden (107) so angeordnet sind, daß jede Öffnung für die Zuführung von Flüssigkeit mit einer entsprechenden Elektrode (107) und jede elektrische Zuführöffnung mit einer entsprechenden Elektrode (107) ausgerichtet ist, und daß der zusammengesetzte Streifen in einzelne Vorrichtungen unterteilt wird, von denen jede zwei Öffnungen für die Zuführung von Flüssigkeit, zwei elektrische Zuführöffnungen und zwei Elektroden (107) besitzt.

2. Verfahren nach Anspruch 1, dadurch gekennzeichnet, daß das Einbetten des länglichen Bandes aus porösem Material (70) durch Extrudieren des nichtporösen Materials (74) bewirkt wird, wodurch ein Film entsteht, daß Film (74) und das längliche Band aus porösem Material (70) zwischen zwei Walzen (76, 78) kalandriert werden, so daß ein zusammengesetzter Streifen (80) mit in eine Fläche desselben eingedrücktem Band (70) entsteht, und daß der zusammengesetzte Streifen (80) unter einer Extruderdüse (84) hindurchgezogen wird, wobei die eine Fläche mit einem weiteren, aus der Extruderdüse (84) austretenden Film aus einem nichtporösen Material (86) in Berührung steht, so daß die eine Fläche mit einer Schicht aus nichtporösem Material (86) überzogen wird.

3. Verfahren nach Anspruch 1, dadurch gekennzeichnet, daß das Aufpressen des länglichen Bandes aus porösem Material (98) auf den länglichen Streifen aus nichtporösem Material erzielt wird, indem ein Streifen aus dem porösen Material (98) in Berührung mit einem ersten, aus einer Extruderdüse (94) austretenden Film aus nichtporösem Material (99) under der Extruderdüse (94) hindurchgezogen wird, wodurch das poröse Material (98) auf einer Seite mit dem ersten Film (99) beschichtet wird, daß der beschichtete Streifen aus porösem Material in mehrere Bänder (96) zerschnitten wird, daß ein zweiter Film aus einem nichtporösen Material (91), der breiter ist als jedes Band aus porösem Material (98), extrudiert wird, und daß das beschichtete Band aus porösem Material und der zweite Film (91) zwischen zwei Walzen kalandriert werden, wobei die dem zweiten Film (91) abgewandte Beschichtung mit dem zwischen den nichtporösen Filmen (99, 91) eingebetteten Band aus porösem Material (98) einen zusammengesetzten Streifen (97) bildet.

4. Verfahren nach Anspruch 3, dadurch gekennzeichnet, daß der erste Film (99) aus Polyäthylen und der zweite Film (91) aus Polystyrol besteht.

Fig. 1

Fig. 2

Fig. 3

Fig. 4

Fig. 5

Fig. 6

Fig. 7

Fig. 8

_Fig. 9_

SLITTER

_Fig. 10_

0 021 798